# FASCICULE DE BREVET EUROPEEN

(11) **EP 3 410 583 B1**
(45) Date de publication et mention de la délivrance du brevet: **23.09.2020**
(21) Numéro de dépôt: 18154681.3
(22) Date de dépôt: 01.02.2018
(51) Int. Cl.: H02K 7/116, H02K 53/00, H02K 7/11, H02K 49/10

(54) **MOTEUR À ROTORS TRANSITOIRES**
MOTOR MIT TRANSITORISCHEN ROTOREN
ENGINE WITH TRANSIENT ROTORS

(30) Priorité: 01.02.2017 BE 201705063
(43) Date de publication de la demande: 05.12.2018
(73) Titulaire: Panagiaris, Catherine, 1070 Bruxelles (BE)
(72) Inventeur: Panagiaris, Catherine, 1070 Bruxelles (BE)
(74) Mandataire: Pronovem

(56) Documents cités:
- WO-A1-94/03962
- WO-A1-2012/150626
- CN-U- 202 918 118
- DE-A1- 19 513 736
- US-A- 5 013 949
- US-A1- 2013 229 081

## Description

### Domaine technique

La présente invention concerne un moteur. De préférence, il s'agit d'un moteur magnéto-mécanique comme cela va être expliqué dans la suite.

### Etat de la technique

Les moteurs électriques sont connus et utilisés dans beaucoup d'applications. Ils permettent par exemple d'utiliser de l'énergie électrique pour faire tourner un arbre moteur qui lui-même peut entraîner par exemple des roues motrices d'une voiture, un élément de fermeture (un volet par exemple). En général, un moteur électrique comprend un stator présentant un évidement central et un rotor qui peut tourner à l'intérieur de l'évidement central du stator. Il existe différentes façons de faire tourner le rotor à l'intérieur du stator. Une méthode consiste à utiliser un rotor comprenant un aimant et à imposer un champ magnétique tournant à l'intérieur de l'évidement central du stator. L'aimant du rotor subit alors une force qui tend à l'aligner sur le champ magnétique tournant du stator. Au final, le rotor tourne. Pour imposer le champ magnétique tournant du stator, une méthode consiste à utiliser des bobines (ou électro-aimants) disposées le long du stator. En imposant un courant électrique spécifique dans chacune des bobines, il est possible d'obtenir un champ magnétique tournant dans l'évidement central du stator. En général, on peut contrôler le couple de sortie du moteur électrique et la vitesse de rotation du rotor avec l'intensité et la fréquence des courants traversant les bobines ou électroaimants. En particulier, en coupant l'alimentation en courant des bobines, le rotor s'arrête.

Les moteurs à courant alternatifs existants présentent des inconvénients. Le courant utilisé a une efficacité réduite par rapport aux moteurs à courant continu. La mise en rotation du rotor de sortie n'est pas aidée par des aimants intermédiaires ou de moteurs intermédiaires à aimants pour réduire la consommation électrique.

Le document US2013/229081 décrit système d'entrainement comprenant un ensemble d'engrenage planétaire utilisant le stator d'un moteur pour produire des sections magnétiques générées électriquement.

Les documents DE 195 13 736 et CN 202 918 118 décrivent tous deux des moteurs à rotors planétaires.

### Résumé de l'invention

L'invention propose à cet effet un moteur comprenant :
- une partie externe comprenant une pluralité de sources de champ magnétique et présentant un évidement central lesdites sources de champ magnétique de la partie externe comprennent une pluralité d'électroaimants et une pluralité d'aimants permanents,
- une partie interne comprenant au moins un dipôle magnétique et disposée dans ledit évidement central de la partie externe, autrement dit un rotor interne et un stator externe, ou un stator interne et un rotor externe, ou un rotor externe qui tourne dans le sens logique et un rotor interne qui tourne dans le sens horlogique, la dite partie externe et ladite partie interne étant configurés de sorte qu'il est possible d'avoir un mouvement de rotation relatif entre eux, caractérisé en ce que :
   ledit moteur comprend en outre une pluralité de rotors transitoires magnétiques positionnés dans ledit évidement central de la partie externe (17), entre ladite partie interne et ladite partie externe, chacun desdits rotors transitoires magnétiques comprenant au moins un dipôle magnétique, lesdits rotors transitoires magnétiques étant en contact avec la partie externe et la partie interne et en ce que : ledit moteur est configuré de sorte qu'une force magnétique de déstabilisation puisse s'exercer sur chacun des rotors transitoires magnétiques permettant d'induire un mouvement relatif entre chacun desdits rotors transitoires magnétiques et ladite partie externe .

Le moteur selon l'invention présente différents avantages. En particulier, le moteur selon l'invention s'arrête automatiquement lorsqu'il est en surcharge ou en survitesse. Les rotors transitoires magnétiques permettent d'avoir un réducteur au sein du moteur de l'invention.

Le moteur selon l'invention nécessite aux moins 2 éléments en mouvement et peut être adapté aux grandes vitesses de rotation.

Le moteur de l'invention présente aussi un rendement intéressant.

Le moteur électrique selon l'invention comprend des moyens magnétiques pour exercer sur chacun des rotors transitoires magnétiques une force magnétique de déstabilisation permettant d'induire un mouvement relatif entre chacun desdits rotors transitoires magnétiques et ledit stator.

Lesdits moyens magnétiques comprennent par exemple huit dipôles magnétiques portés par le rotor.

Les sources de champ magnétique du stator comprennent des électroaimants. Cet exemple du moteur de l'invention peut être nommé électro magnéto mécanique. Le nombre d'électroaimants est par exemple égal à huit. En d'autres termes, le stator comprend huit électroaimants selon cette variante. Il y a alors, de préférence, huit rotors transitoires : quatre rotors transitoires magnétiques et quatre rotors transitoires amagnétiques sur la même tranche du moteur ; si le moteur comprend plusieurs tranches, ces rotors transitoires sont alternés au niveau magnétique mais restent dans le même alignement mécanique, et ceci même si les éléments qui produisent des champs magnétiques, sur chaque tranche du moteur sont décalés pour avoir une aide au démarrage direct.

Selon une variante possible, le moteur selon l'invention est configuré de sorte que lesdits électroaimants du stator peuvent être tous alimentés par un courant électrique de même phase.

Il est également prévu d'avoir des électroaimants du stator qui peuvent être alimentés par des courants électriques de deux, voire trois phases électriques différentes dans l'exemple électro magnéto mécanique.

Le stator du moteur électrique selon l'invention comprend aussi une pluralité d'aimants permanents ou dipôles magnétiques. Selon cette variante préférée, le mouvement des rotors transitoires magnétiques est facilité. Au final, le mouvement global des différents éléments du moteur est plus fluide ce qui augmente davantage le rendement du moteur selon l'invention. Les dipôles magnétiques du stator selon cette version préférée du moteur permettent aussi un pré-lancement des rotors transitoires magnétiques. Le démarrage du moteur en est donc facilité ce qui améliore aussi le rendement global. On peut aussi avoir, par exemple manchonnés dans le même alignement, 3 moteurs décalés chacun de 15°, pour que les positions d'étapes des composantes magnétiques aident au démarrage direct, utilisant chacune une phase électrique différente décalée de 120°. Pour avoir un moteur triphasé synchrone, qui est économe, avec démarrage direct.

Le moteur selon l'invention peut par exemple, pour faire simple, avoir des transmissions mécaniques de base : engrenages, bagues de transmission, vérins pneumatiques mais d'autres possibilités existent et peuvent être utilisées. Elles sont, en général, situées aux extrémités du moteur. La partie motrice magnétique est composée de sections amagnétiques et de sections magnétiques qui ont des espaces entre les composants magnétiques dits entrefers, variables selon moments par rapport à la situation d'étapes et qui se situent en général entre les extrémités.

Si le moteur est en plusieurs tranches, il peut avoir un nombre réduit d'aimants fixes ou rotatifs dit dipôles magnétiques simple ou radial ou de roue polaire avec quatre dipôles magnétiques avec polarité alternée à la surface par tranche. Ou un nombre réduit d'électroaimants 22 par tranche, ce qui permet d'augmenter le diamètre des électroaimants.

Pour exemple : 4 rotors transitoires dit roue polaire composés de deux pôles nord et deux pôles sud alternés à la surface ou bien de dipôles radiales avec un pôle nord sur la surface du périmètre externe et un pôle sud au niveau interne, avec entre eux 4 rotors transitoires amagnétiques sur la même tranche.

Au niveau des rotors de la partie motrice, sur les sections dites magnétiques de type roue polaire ou dipôle, la longueur de l'axe magnétique des aimants est plus longue que la largeur, ce qui permet d'être maintenus par des composantes amagnétiques.

Le stator peut avoir essentiellement la forme d'un cylindre creux ayant un diamètre interne et un diamètre externe. L'évidement central du stator correspond alors à la cavité centrale du cylindre creux.

Les rotors transitoires sont composés de sections de transmission, par exemple mécaniques (engrenages) aux extrémités, et entre ceux-ci au niveau motrice magnétique il y a des sections dites amagnétiques et des sections dites magnétiques, qui peuvent avoir des aimants dans le même alignement ou décalés, et ces rotors peuvent avoir essentiellement une forme de cylindres. Dans ce cas, les axes de révolution des rotors transitoires sont de préférence parallèles. Si le stator a la forme d'un cylindre creux, son axe de révolution est en général parallèle aux axes de révolution des rotors transitoires.

Le diamètre interne du stator ayant la forme d'un cylindre creux est par exemple quatre fois plus grand que le diamètre d'un rotor transitoire magnétique ayant la forme d'un cylindre.

Chaque rotor transitoire magnétique peut par exemple comprendre deux dipôles magnétiques. Le rapport de diamètre du rotor transitoire et sa vitesse de rotation, par rapport à la partie externe et interne en prenant compte du choix de la partie stator, donne le rapport couple et vitesses selon choix du rotor sortant.

### Brève description des figures

D'autres caractéristiques et avantages de l'invention apparaîtront à la lecture de la description détaillée qui suit pour laquelle on pourra se reporter aux figures annexées dans lesquelles :
- la figure 1 montre un exemple de moteur électrique selon l'invention ;
- les figures 2A à 2E montrent une vue rapprochée pour différents temps d'une partie du moteur électrique selon un mode de réalisation de l'invention ;
- les figures 3A et 3B montrent une autre forme de déstabilisation dite interne inversée ou déstabilisation externe à part.
- la figure 4 montre un autre exemple possible du moteur électrique selon l'invention dont les électroaimants fonctionnent avec deux phases électriques différentes;
- la figure 5 montre une vue de côté d'un exemple de moteur électrique selon l'invention utilisant deux phases électriques pour les électroaimants ;
- la figure 6 montre un autre exemple possible du moteur électrique selon l'invention dont les électroaimants fonctionnent avec trois phases électriques différentes ;
- les figures 7A à 7F montrent une vue rapprochée à différents moments d'une partie d'un moteur électrique selon une variante possible de l'invention ;
- la figure 8A montre de face l'extrémité de la partie dite transmission planétaire mécanique, de la partie externe qui peut être un stator ou rotor externe avec la disposition pour les rotors transitoires et la partie interne qui peut être un rotor ou stator interne, ainsi que la figure du bas (8B) qui montre un stator transitoire.

Les dessins des figures ne sont pas nécessairement à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée d'au moins un mode de réalisation préféré

La présente invention est décrite avec des réalisations particulières et des références à des figures mais l'invention n'est pas limitée par celles-ci. Les dessins ou figures décrits ne sont que schématiques et ne sont pas limitants.

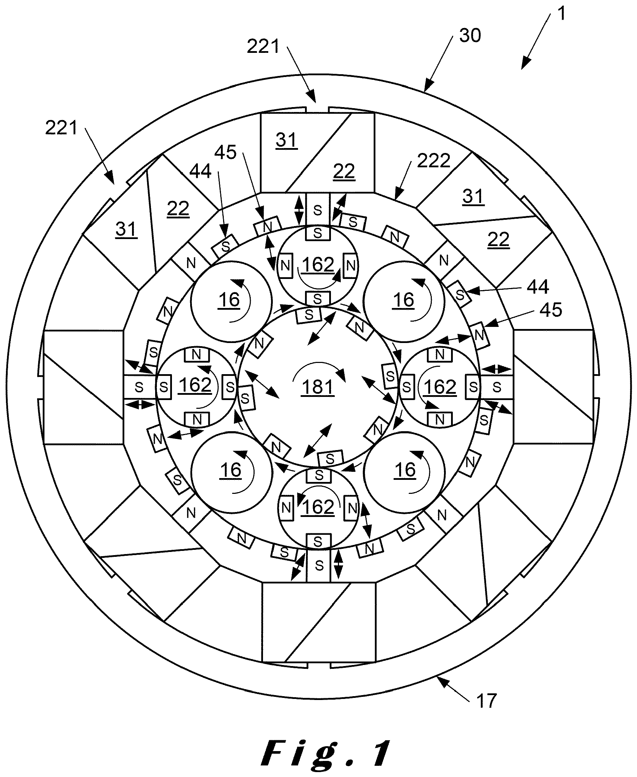

La figure 1 montre un exemple de moteur électrique 1 selon l'invention. Il comprend un stator 17 comprenant une pluralité d'électroaimants 22.

De préférence, le stator 17 comprend huit électroaimants 22. Le stator présente un évidement central qui a par exemple la forme d'un cylindre de révolution.

Le moteur électrique 1 comprend en outre un rotor 181 positionné dans l'évidement central du stator 17. Le stator 17 et le rotor 181 sont configurés de sorte qu'il est possible d'avoir un mouvement de rotation relatif entre ces deux éléments. De préférence, le stator 17 est bloqué en position et le rotor 181 est apte à tourner. De préférence, le rotor 181 a la forme d'un cylindre de révolution. Dans ce cas et lorsque l'évidement central du stator 17 a également la forme d'un cylindre de révolution, les axes de révolution (ou de symétrie cylindrique) coïncident en général.

Le moteur électrique 1 selon l'invention comprend également une pluralité de rotors transitoires magnétiques 162. Ces rotors transitoires magnétiques 162 sont positionnés dans l'évidement central du stator 17, entre le rotor 181 et le stator 17 (donc entre le rotor 181 et la paroi interne du stator 17 délimitant au moins partiellement l'évidement central du stator 17). De préférence, chaque rotor transitoire magnétique 162 est en contact à la fois avec le rotor 181 et le stator 17, comme cela est montré à la figure 1. Chaque rotor transitoire magnétique 162 comprend au moins un dipôle magnétique. Ce terme est connu de l'homme du métier. De préférence, chaque dipôle magnétique de chaque rotor transitoire magnétique 162 est un aimant permanent présentant un pôle Nord et un pôle Sud magnétiques.

Comme cela est montré à la figure 1, chaque rotor transitoire magnétique 162 comprend de préférence quatre dipôles magnétiques alternés, autrement dit roue polaire avec deux pôles nord et deux pôles sud alternés à la surface. De préférence, les rotors transitoires magnétiques 162 ont la forme de cylindres de révolution. Quand l'évidement central du stator 17 et le rotor 181 ont également la forme de cylindres de révolution, les différents axes de révolution coïncident de préférence.

Le rotor 181, dit déstabilisateur interne comprend huit dipôles magnétiques comme cela est montré à la figure 1. Autrement dit roue polaire avec quatre pôles nord et quatre pôles sud alternés à la surface.

Lorsque le moteur électrique 1 fonctionne, les électroaimants 22 du stator 17 sont de préférence tous alimentés par un courant électrique d'une seule et même phase 31. De préférence, les électroaimants 22 du stator 17 sont alors alimentés par un courant à 50 Hz. Dans ce cas, les quatre rotors transitoires magnétiques 162 de la figure 1 tournent de préférence à 3000 tours par minute (3000 tr/min) et entraînent le rotor 181 à tourner de préférence à 2250 tr/min.

De préférence, les électroaimants 22 du stator 17 sont bobinés de sorte que si un électroaimant 22 induit un pôle magnétique Sud vers l'évidement central du stator 17, un électroaimant 22 adjacent induit alors un pôle magnétique Nord et inversement. Cela est illustré à la figure 1 où une lettre S ou N est chaque fois présente près de chaque électroaimant 22, du côté de l'évidement central du stator 17.

Comme cela est montré à la figure 1, le stator 17 comprend de préférence une pluralité d'aimants permanents (44, 45). Le signe de référence 44 (respectivement 45) est utilisé pour désigner un pôle Sud magnétique (respectivement Nord magnétique) d'un tel aimant permanent du stator 17.

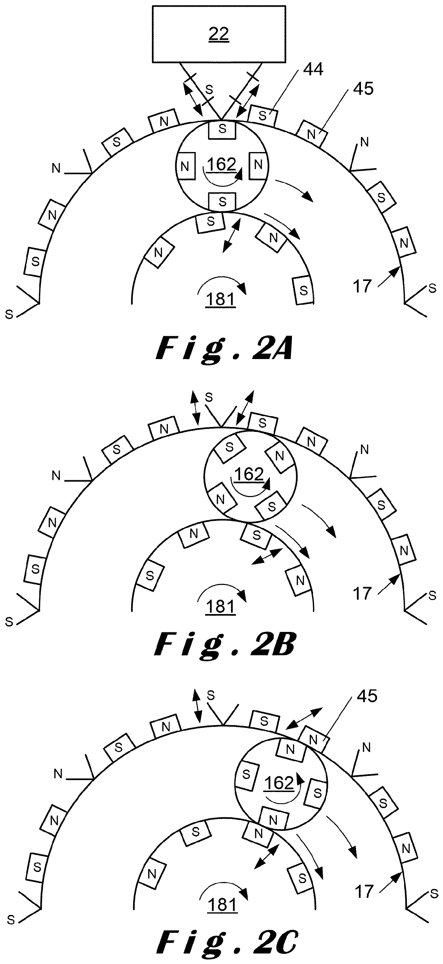

Le principe de fonctionnement du moteur électrique 1 dont un exemple est montré à la figure 1 est expliqué à l'aide des figures 2A à 2E.

À la figure 2A, le rotor transitoire magnétique 162 montré à la figure 2A se trouve entre un pôle Sud magnétique S généré par un électroaimant 22 du stator 17 et un pôle Sud magnétique légèrement décalé d'un aimant permanent du rotor 181. Ledit rotor transitoire magnétique 162 est également positionné à proximité d'un pôle Sud magnétique 44 d'un aimant permanent du stator 17. Vu la configuration des différents pôles magnétiques montrée à la figure 2A, le rotor transitoire magnétique 162 est repoussé (deux pôles Sud magnétiques se repoussent). Le rotor transitoire magnétique 162 est donc déstabilisé et il se met en mouvement en tournant dans un sens qui le déplace dans un sens horlogique par rapport au stator 17. Le mouvement du rotor transitoire 162 entraîne le rotor 181 qui se met également en rotation selon un mouvement horlogique.

À la figure 2B, le rotor transitoire magnétique 162 continue d'être repoussé par le champ magnétique généré par l'électroaimant 22, par le pôle Sud magnétique 44 et par le pôle Sud magnétique d'un aimant permanent du rotor 181. Le rotor transitoire magnétique 162 continue donc son mouvement, entraînant le rotor 181.

À la figure 2C, le rotor transitoire magnétique 162 se trouve entre le pôle Nord 45 d'un aimant permanent du stator 17 et le pôle Nord d'un aimant permanent du rotor 181. Le rotor transitoire magnétique 162 présentant des pôles Nord magnétiques vers ces deux pôles magnétiques, il est encore repoussé et tourne dans un sens qui le fait se déplacer dans un sens horlogique par rapport au stator 17, entraînant le rotor 181 qui tourne également dans un sens horlogique aidé par deux électroaimants 22 (niveau magnétique maximum au niveau sinusoïdal), dont l'un repousse et l'autre attire le rotor transitoire 162.

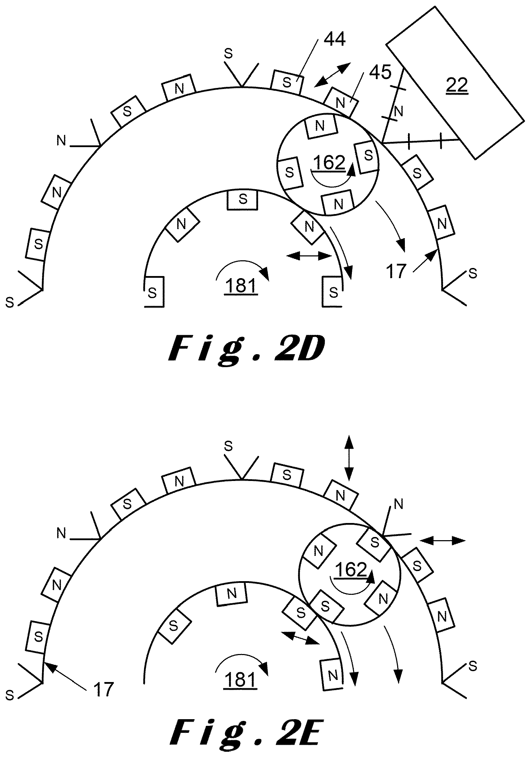

À la figure 2D, un pôle Nord magnétique du rotor transitoire magnétique 162 est repoussé par un pôle Nord 45 d'un aimant permanent du stator 17. Dans le même temps, un pôle Sud magnétique du rotor transitoire magnétique 162 est attiré par un pôle Nord généré par un électroaimant 22 du stator 17. Cela a pour conséquence que le rotor transitoire magnétique 162 continue à tourner dans un sens qui le fait avancer selon un sens horlogique, entraînant le rotor 181 à tourner également selon un sens horlogique.

À la figure 2E, le rotor transitoire magnétique 162 est dans une position telle qu'il présente un pôle Sud magnétique au pôle Nord magnétique généré par un électroaimant 22. Néanmoins, le rotor transitoire magnétique 162 présente également dans cette position un pôle Sud magnétique à un pôle Sud magnétique d'un aimant permanent du stator 181. Il y a donc naissance à ce niveau d'une force de répulsion magnétique qui provoque une déstabilisation du rotor transitoire magnétique 162, et ce même si un électroaimant 22 l'attire. Puis au changement de polarité des électromaimants 22 le rotor transitoire 162 se retrouve au même niveau qu'à la figure 2A, et à chaque demi-cycle ce mouvement se reproduit au rythme de la fréquence électrique.

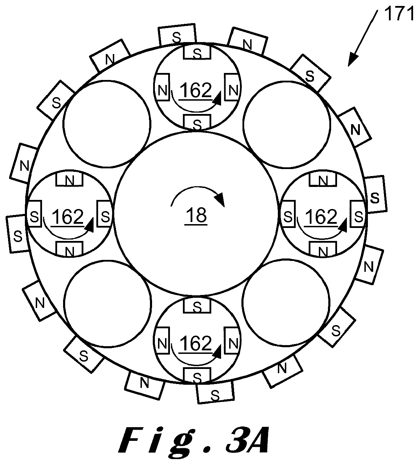

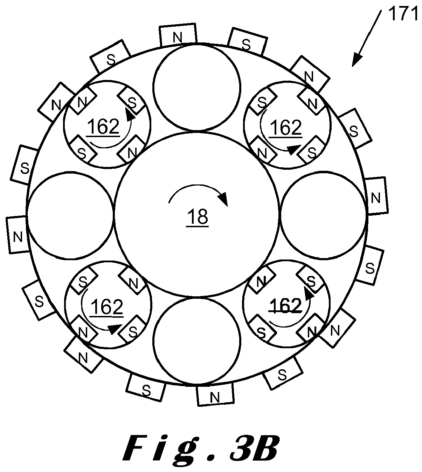

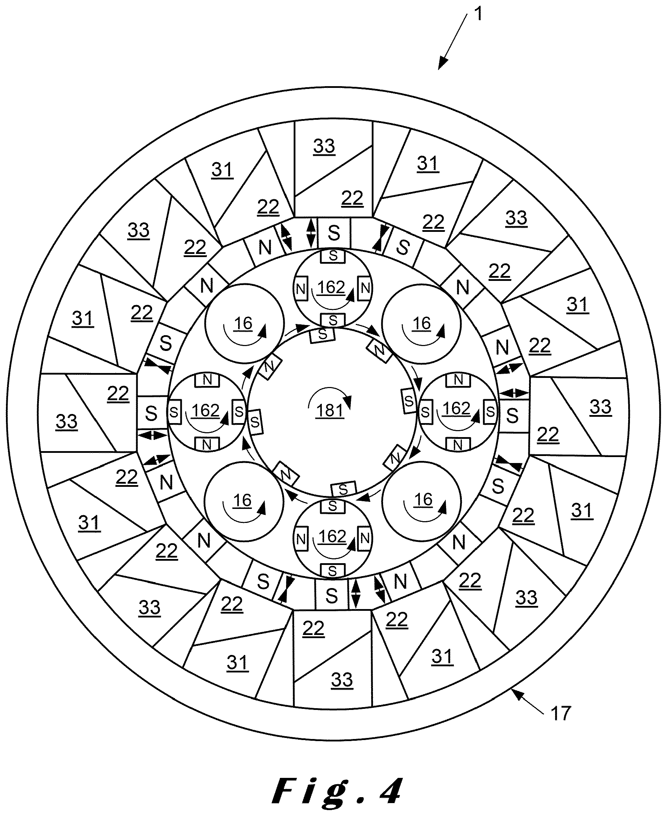

Les figures 3A et 3B représentent une forme de déstabilisation, dite interne inversée ou déstabilisation externe à part sur une ou deux tranches au minimum, qui est valable pour le moteur (1) ; cette forme de déstabilisation n'est pas limitée aux figures 1 et 4 ; la forme ou la partie intérieure de la partie externe correspond à quatre fois le diamètre du rotor transitoire, exemple : trois fois, quatre fois, cinq fois, six fois, sept fois etc. La figure 4 montre un autre exemple de mode de réalisation du moteur électrique 1 selon l'invention. Dans cette variante, les courants électriques parcourant les seize électroaimants 22 n'ont pas tous la même phase.

Il y a plutôt deux phases électriques différentes (31 et 33), de préférence décalées de 120°. Comme cela est montré à la figure 4, deux électroaimants 22 parcourus par un courant électrique de même phase (31 par exemple) sont de préférence séparés par un électroaimant 22 parcouru par un courant électrique de phase différente 33. On peut voir à la figure 4, les différents pôles magnétiques (N pour Nord et S pour Sud) générés par les différents électroaimants 22 à un certain temps t. Dans cet exemple, le rotor 181 comprend une pluralité d'aimants permanents agissant comme moyens magnétiques pour faciliter un mouvement relatif entre les rotors transitoires magnétiques 162 et le stator 17. De préférence, le stator 17 du moteur électrique 1 montré à la figure 4 a un périmètre interne de la partie externe qui vaut quatre fois le périmètre d'un rotor transitoire magnétique 162. Comme cela est montré à la figure 4, le moteur électrique 1 comprend aussi de préférence une pluralité de rotors transitoires amagnétiques 16, si fait en deux tranches et plus, avec composition alternée des rotors transitoires.

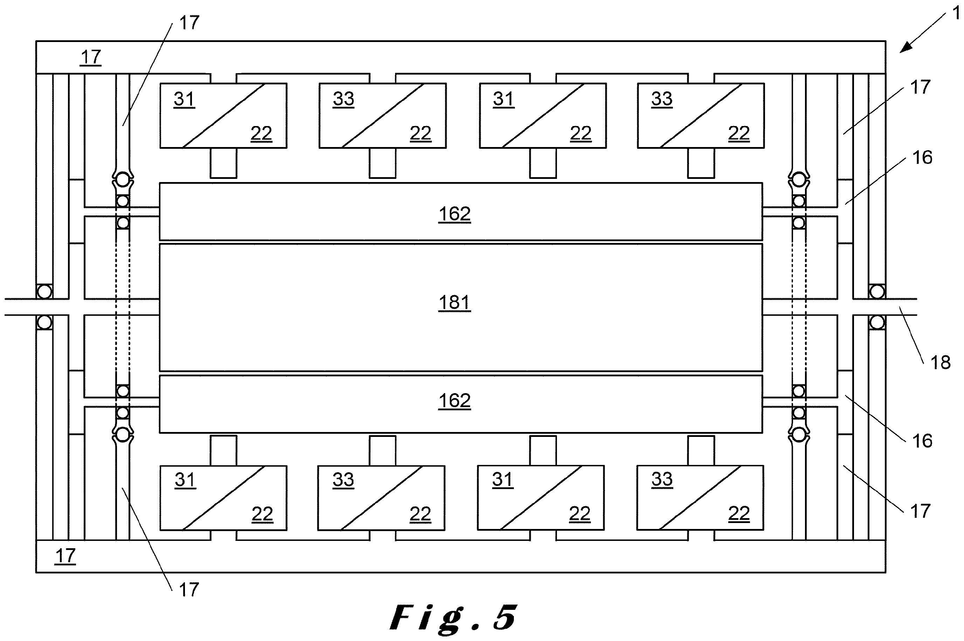

La figure 5 montre une vue de côté d'un exemple de moteur électrique 1 selon l'invention utilisant deux phases électriques (31, 33) pour les électroaimants 22. Comme on peut le voir sur cette figure, les électroaimants 22 peuvent se situer selon quatre tranches superposées dans cet exemple. Mais les électromaimants 22 de chaque tranche ne sont pas dans le même alignement que la tranche qui précède, donc réduction de l'espace réel.

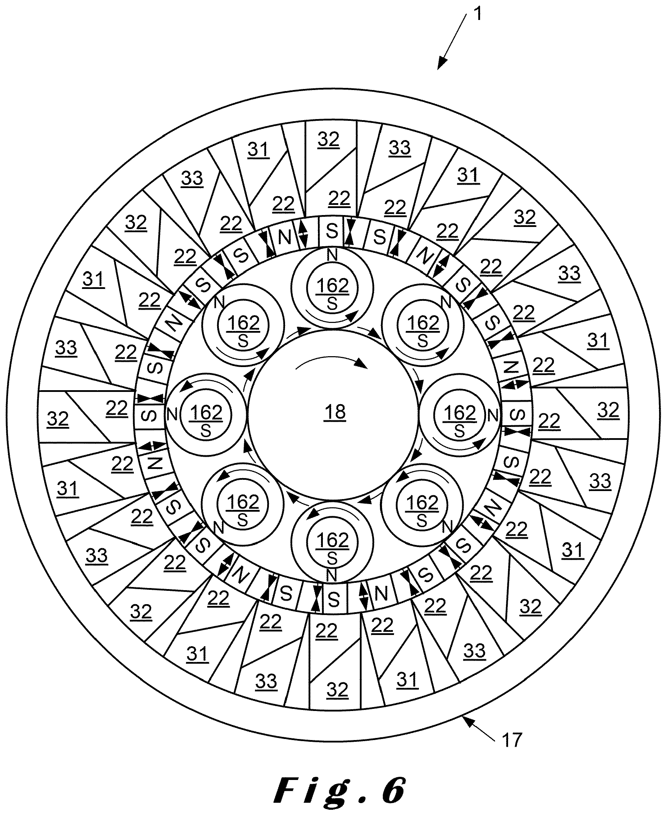

La figure 6 montre un autre mode de réalisation du moteur électrique 1 de l'invention où les électroaimants 22 peuvent être alimentés par des courants électriques de trois phases électriques différentes (31, 32, 33). De préférence, ces trois phases électriques (31, 32, 33) sont décalées de 120°.

De préférence, en utilisant une fréquence de 50 Hz, les huit rotors transitoires magnétiques 162 tournent à 1500 tr/min et entraînent le rotor 181 à tourner à 1125 tr/min. Comme cela est illustré à la figure 6, chaque rotor transitoire magnétique 162 comprend ici un dipôle magnétique qualifié de radial car le pôle Sud magnétique dudit dipôle magnétique se trouve au centre d'un rotor transitoire magnétique 162 et le pôle Nord magnétique dudit dipôle magnétique se trouve à la périphérie d'un rotor transitoire magnétique 162. Pour le mode de réalisation illustré à la figure 6, il n'y a pas besoin d'aimants de déstabilisation. Mais on peut utiliser un déstabilisateur externe à part.

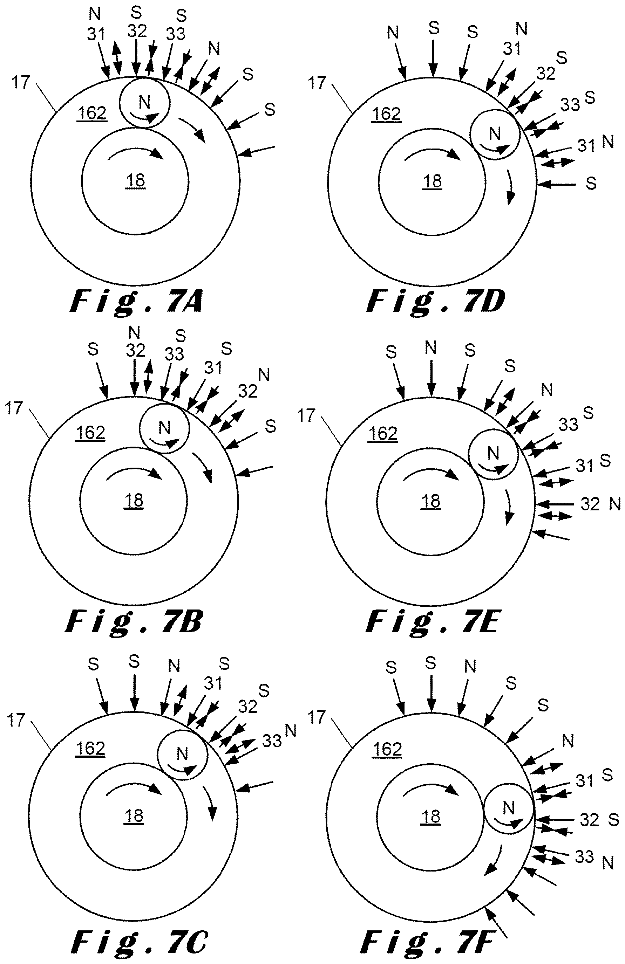

Les figures 7a à 7f illustrent le fonctionnement du moteur électrique 1 de la figure 6 en se concentrant sur le mouvement d'un rotor transitoire magnétique 162.

A la figure 7A, un rotor transitoire magnétique 162 se trouve face à un électroaimant 22 alimenté par une phase électrique 32 et dont la polarité vers ledit rotor transitoire magnétique 162 est Sud et en diminution. Le rotor transitoire magnétique 162 présentant à sa périphérie une polarité Nord magnétique est donc attiré par ledit électroaimant 22. Néanmoins, à gauche de l'électroaimant 22 alimenté par une phase électrique 32 se trouve un autre électroaimant 22 alimenté par une autre phase électrique 31. Cet autre électroaimant 22 présente une polarité Nord maximale vers l'évidement central du stator 17. Cet autre électroaimant 22 crée donc une force magnétique de répulsion sur le rotor transitoire magnétique 162. A droite de l'électroaimant 22 de phase électrique 32, il y a un troisième électroaimant 22 d'une troisième phase électrique 33. Ce troisième électroaimant 22 crée une polarité Sud magnétique en augmentation. Au final, il y a une force magnétique de déstabilisation qui s'exerce sur le rotor transitoire magnétique 162 induisant un mouvement vers la droite dudit rotor transitoire magnétique 162 par rapport au stator 17. Le rotor transitoire magnétique 162 se déplace donc vers la droite et il entraîne le rotor 181, par exemple par couplage mécanique entre le rotor transitoire magnétique 162 et le rotor 181 et le stator 17.

A la figure 7B, l'électroaimant 22 de phase électrique 32 génère un pôle Nord magnétique maximum vers l'évidement central du stator 17. Il repousse donc le rotor transitoire magnétique 162. L'électroaimant 22 de phase électrique 33 génère un pôle Sud magnétique en diminution. A droite, l'électroaimant 22 de phase électrique 31 génère un pôle Sud magnétique en augmentation. Au final, le rotor transitoire magnétique 162 est repoussé et attiré vers la droite, entraînant le rotor 181.

Les figures 7C à 7F illustrent le déplacement du rotor transitoire magnétique 162 à des temps ultérieurs basé sur le même principe que celui décrit pour les figures 7A à 7B.

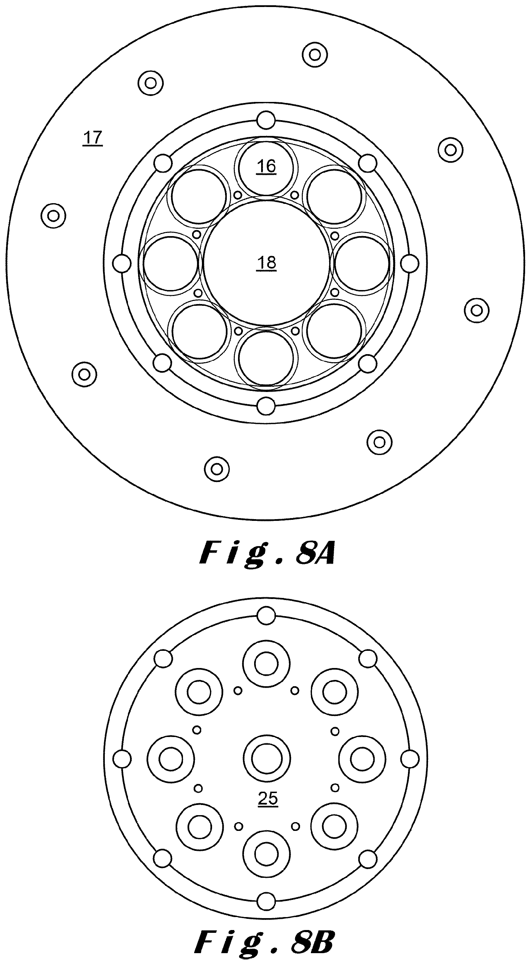

La surface interne du stator 17, ou rotor externe 17 au niveau transmission mécanique, avec par exemple des engrenages avec dents dirigées vers l'intérieur, et située aux extrémités du moteur est illustrée à la figure 8A. Au centre se situe l'engrenage du rotor ou stator interne 181 en contact avec huit engrenages des transmissions de mouvements, situés aux extrémités des rotors transitoires 162.

Le moteur 1 selon l'invention a alors les particularités des engrenages planétaires. Le stator transitoire 25 est représenté à la figure 8B qui maintient les axes des rotors 162 et 181, ainsi que les trous des axes de fixation 8 pour les plaques de transmission.

## Revendications

1. Moteur (1) comprenant :
- une partie externe (17) comprenant une pluralité de sources de champ magnétique (22) et présentant un évidement central, lesdites sources de champ magnétique de la partie externe (17) comprenant une pluralité d'électroaimants (22) et une pluralité d'aimants permanents (44, 45),
- une partie interne (18-181) comprenant au moins un dipôle magnétique et disposée dans ledit évidement central de la partie externe (17), autrement dit un rotor interne et un stator externe, ou un stator interne et un rotor externe, ou un rotor externe qui tourne dans le sens logique et un rotor interne qui tourne dans le sens horlogique, la dite partie externe (17) et ladite partie interne (18-181) étant configurés de sorte qu'il est possible d'avoir un mouvement de rotation relatif entre eux,
- une pluralité de rotors transitoires magnétiques (162) positionnés dans ledit évidement central de la partie externe (17), entre ladite partie interne (18-181) et ladite partie externe (17), chacun desdits rotors transitoires magnétiques (162) comprenant au moins un dipôle magnétique, lesdits rotors transitoires magnétiques (162) étant en contact avec la partie externe (17) et la partie interne (181),
- ledit moteur (1) étant configuré de sorte qu'une force magnétique de déstabilisation puisse s'exercer sur chacun des rotors transitoires magnétiques (162) permettant d'induire un mouvement relatif entre chacun desdits rotors transitoires magnétiques (162) et ladite partie externe (17).

2. Moteur (1) selon l'une quelconque des revendications précédentes **caractérisé en ce qu'**il est configuré de sorte que lesdits électroaimants (22) de la partie externe (17) peuvent être tous alimentés par un courant électrique de même phase (31).

3. Moteur (1) selon l'une quelconque des revendications précédentes **caractérisé en ce qu'**il est configuré de sorte que lesdits électroaimants (22) de la partie externe (17) peuvent être alimentés par un courant électrique de deux phases électriques différentes (31, 33).

4. Moteur (1) selon l'une quelconque des revendications précédentes **caractérisé en ce qu'**il est configuré de sorte que lesdits électroaimants (22) de la partie externe (17) peuvent être alimentés par un courant électrique de trois phases électriques différentes (31, 32, 33).

5. Moteur (1) selon l'une quelconque des revendications précédentes **caractérisé en ce que** le nombre de rotors transitoires (162) est égal à quatre fois deux.

6. Moteur (1) selon l'une quelconque des revendications précédentes **caractérisé en ce que** ladite partie externe (17) a essentiellement la forme d'un cylindre creux ayant un diamètre interne et un diamètre externe.

7. Moteur (1) selon l'une quelconque des revendications précédentes **caractérisé en ce que** lesdits rotors transitoires magnétiques (162) ont essentiellement la forme de cylindres.

## Patentansprüche

1. Motor (1), umfassend:
- einen äußeren Teil (17), umfassend eine Vielzahl von Magnetfeldquellen (22) und aufweisend eine zentrale Aussparung, wobei die besagten Magnetfeldquellen des äußeren Teils (17) eine Vielzahl von Elektromagneten (22) und eine Vielzahl von Dauermagneten (44, 45) umfassen,
- einen inneren Teil (18-181), umfassend mindestens einen magnetischen Dipol und angeordnet in der besagten zentralen Aussparung des äußeren Teils (17), anders gesagt, einen inneren Rotor und einen äußeren Stator, oder einen inneren Stator und einen äußeren Rotor, oder einen äußeren Rotor, der entgegengesetzt zur Uhrzeigerrichtung dreht, und einen inneren Rotor, der in Uhrzeigerrichtung dreht, wobei der besagte äußere Teil (17) und der besagte innere Teil (18-181) derart konfiguriert sind, dass es möglich ist, eine relative Rotationsbewegung zwischen ihnen zu haben,
- eine Vielzahl von transienten magnetischen Rotoren (162), die in der besagten zentralen Aussparung des äußeren Teils (17) zwischen dem besagten inneren Teil (18-181) und dem besagten äußeren Teil (17) positioniert sind, wobei jeder der besagten transienten magnetischen Rotoren (162) mindestens einen magnetischen Dipol umfasst, wobei die besagten transienten magnetischen Rotoren (162) im Kontakt mit dem äußeren Teil (17) und dem inneren Teil (181) sind,
- wobei der besagte Motor (1) derart ausgelegt ist, dass eine magnetische Destabilisierungskraft auf jeden der transienten magnetischen Rotoren (162) ausgeübt werden kann, die erlaubt, eine relative Bewegung zwischen jedem der besagten transienten magnetischen Rotoren (162) und dem besagten äußeren Teil (17) zu induzieren.

2. Motor (1) nach irgendeinem der vorangehenden Ansprüche, **dadurch gekennzeichnet, dass** er derart ausgelegt ist, dass die besagten Elektromagneten (22) des äußeren Teils (17) alle von einem elektrischen Strom mit gleicher Phase (31) versorgt werden können.

3. Motor (1) nach irgendeinem der vorangehenden Ansprüche, **dadurch gekennzeichnet, dass** er derart ausgelegt ist, dass die besagten Elektromagneten (22) des äußeren Teils (17) von einem elektrischen Strom mit zwei unterschiedlichen elektrischen Phasen (31, 33) versorgt werden können.

4. Motor (1) nach irgendeinem der vorangehenden Ansprüche, **dadurch gekennzeichnet, dass** er derart ausgelegt ist, dass die besagten Elektromagneten (22) des äußeren Teils (17) von einem elektrischen Strom mit drei unterschiedlichen elektrischen Phasen (31, 32, 33) versorgt werden können.

5. Motor (1) nach irgendeinem der vorangehenden Ansprüche, **dadurch gekennzeichnet, dass** die Anzahl transienter Rotoren (162) gleich vier Mal zwei ist.

6. Motor (1) nach irgendeinem der vorangehenden Ansprüche, **dadurch gekennzeichnet, dass** der besagte äußere Teil (17) im Wesentlichen die Form eines hohlen Zylinders mit einem Innendurchmesser und einem Außendurchmesser hat.

7. Motor (1) nach irgendeinem der vorangehenden Ansprüche, **dadurch gekennzeichnet, dass** die besagten transienten magnetischen Rotoren (162) im Wesentlichen die Form von Zylindern haben.

## Claims

1. Motor (1) comprising:
- an outer part (17) comprising a range of magnetic field sources (22) and having a central recess, said magnetic field sources of the outer part (17) comprising a range of electromagnets (22) and a range of permanent magnets (44, 45),
- an inner part (18-181) comprising at least one magnetic dipole and arranged in said central recess of the outer part (17), in other words an inner rotor and an outer stator, or an inner stator and an outer rotor, or an outer rotor that rotates in the counterclockwise direction and an inner rotor that rotates in the clockwise direction, said outer part (17) and said inner part (18-181) being configured such that it is possible to have a relative rotational movement between them,
- a range of transient magnetic rotors (162) positioned in said central recess of the outer part (17), between said inner part (18-181) and said outer part (17), each of said transient magnetic rotors (162) comprising at least one magnetic dipole, said transient magnetic rotors (162) being in contact with the outer part (17) and the inner part (181),
- said motor (1) being configured such that a magnetic destabilization force can be exerted on each of the transient magnetic rotors (162) making it possible to induce a relative movement between each of said transient magnetic rotors (162) and said outer part (17).

2. Motor (1) according to any one of the preceding claims, **characterized in that** it is configured such that said electromagnets (22) of the outer part (17) can all be supplied with an electric current of the same phase (31).

3. Motor (1) according to any one of the preceding claims, **characterized in that** it is configured such that said electromagnets (22) of the outer part (17) can be supplied with an electric current with two different electric phases (31, 33).

4. Motor (1) according to any one of the preceding claims, **characterized in that** it is configured such that said electromagnets (22) of the outer part (17) can be supplied with an electric current with three different electric phases (31, 32, 33).

5. Motor (1) according to any one of the preceding claims, **characterized in that** the number of transient rotors (162) is equal to four times two.

6. Motor (1) according to any one of the preceding claims, **characterized in that** said outer part (17) essentially has the form of a hollow cylinder having an inner diameter and an outer diameter.

7. Motor (1) according to any one of the preceding claims, **characterized in that** said transient magnetic rotors (162) essentially have the form of cylinders.
